# EUROPEAN PATENT APPLICATION

(11) **EP 2 816 319 A1**
(43) Date of publication of application: **24.12.2014**
(21) Application number: 14170351.2
(22) Date of filing: 28.05.2014
(51) Int. Cl.: G01C 21/34

(54) **A method for route guidance and a device therefor**

(30) Priority: 19.06.2013 IN CH26542013
(71) Applicant: ROBERT BOSCH GMBH, 70442 Stuttgart (DE); Robert Bosch Engineering And Business Solutions Limited, Bangalore 560 095 State of Karnataka (IN)
(72) Inventor: George, Paul, 560071 Karnataka, Bangalore (IN)

(57) **Abstract**

A navigation device 100 for route guidance is disclosed. The navigation device 100 comprises a reception module 101 to receive a desired drive time to reach a destination. A calculation means 102 of the navigation device 100 calculates a remaining desired drive time from a current location to the destination. An estimation module 103 estimates a drive time corresponding to at least one route style from the current location to the destination. A comparison module 104 compares the remaining desired drive time with the estimated drive time. A determination module 105 determines a route style to reach the destination in the desired drive time depending on the comparison.

## Description

### Field of the invention

The invention relates to a method for route guidance using a navigation device. More particularly, it relates to determining a route style to reach a destination in a desired drive time.

### Background of the invention

A navigation device provides information regarding a vehicle's location along a route using global positioning system (GPS) and map data. The navigation device provides options to a driver to choose a route style, for example, a fastest route, a shortest route, a scenic route, an eco friendly route, etc., from available preprogrammed route styles. The navigation device also allows the driver to input a desired drive time to reach a destination and a route is plotted based on the desired drive time. The route may also be dynamically updated based on the desired drive time. The prior art, US patent, 6317685 discloses a navigation system to calculate one or more alternate routes upon detecting that the actual time of travel of the vehicle along the route to its current position exceeds the time estimated by the navigation system to travel to such point by a given threshold amount. This feature enables actual conditions that may be retarding the pace of travel along the calculated route to be taken into account by the navigation system without the need for driver intervention or the receipt and/or use of traffic information broadcasts.

### Object of the invention

The object of the invention is to provide route guidance using a navigation device. The navigation device receives a desired drive time entered by a user to reach a destination. The navigation device calculates a remaining desired drive time from a current location to the destination. The navigation device estimates a drive time corresponding to at least one route style, for example, a fastest route style, an eco friendly route style, etc., from the current location to the destination. The navigation device compares the remaining desired drive time with the drive time corresponding to the route styles. The navigation device determines a route style to reach the destination in the desired drive time depending on the comparison. When the desired drive time is within a predefined threshold value from the drive time of a route style, then the navigation device suggests the user of the vehicle to switch to that route style to reach the destination.

### Advantages of the invention

The navigation device computes the distance covered with respect to the desired drive time and accordingly calculates an appropriate route style, for example, a fastest route, an eco-friendly route, etc., to reach the destination from a current location. Thus, the navigation device allows the user of the vehicle to choose an economical and safer route while letting the user reach the destination in the desired drive time. The navigation device suggests the user to switch to an eco friendly route style when the navigation device determines that the user can reach the destination in the desired drive time. This reduces the fuel consumption by the vehicle. The navigation device tracks the user's driving performance with respect to the desired drive time and informs the user if he lags with respect to his desired drive time and suggests appropriate route style to reach the destination.

### Short description of the drawing

An exemplifying embodiment of the invention is explained in principle below with reference to the drawings. The drawings are,
Figure 1 illustrates a navigation device for route guidance in accordance with this invention.
Figure 2 illustrates a flowchart of the method for route guidance using a navigation device in accordance with this invention.

### Description of the invention

The invention relates to a method for route guidance using the navigation device. The invention relates to determining a route style to reach a destination in a user's desired drive time. According to the present invention, this is done by the features of the independent claims.

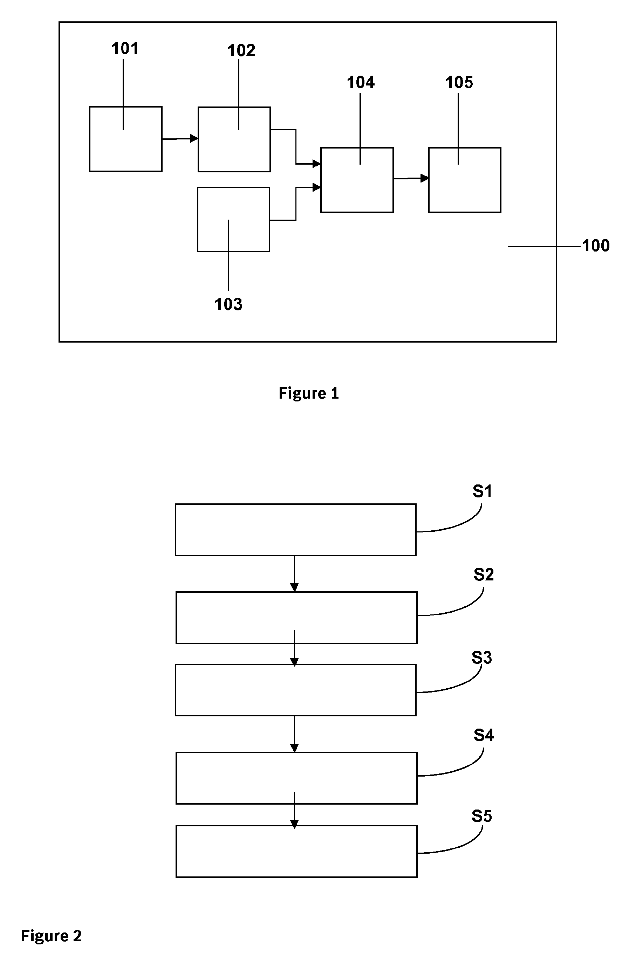

Figure 1 illustrates a navigation device 100 in a vehicle for route guidance in accordance with this invention. The navigation device 100 comprises a reception module 101 to receive a desired drive time from a user to reach a destination. A calculation module 102 calculates a remaining desired drive time from a current location to the destination. An estimation module 103 of the navigation device 100 estimates a drive time corresponding to at least one route style, for example, a shortest route style, a fastest route style, an eco friendly route style, etc., from the current location to the destination. A comparison module 104 receives the remaining desired drive time from the calculation module 102 as one of the two inputs. The estimated drive time corresponding to at least one route style from the estimation module 103 is the other input to the comparison module 104. The comparison module 104 compares the remaining desired drive time with the estimated drive time corresponding to the route style. A determination module 105 determines a route style to reach the destination in the desired drive time depending on an output of the comparison module 105. The navigation device 100 displays the determined route style to the user to reach the destination from the current location.

At the start of a trip, the user of the vehicle enters the destination details and his desired drive time to reach the destination into the navigation device 100. The navigation device 100 displays a fastest drive time to the destination based on the speed limits of different road segments in the trip. The navigation device 100 prompts the user to enter the desired drive time which is greater than the fastest drive time. If the user enters the desired drive time which is lower than the fastest drive time, then the navigation device 100 informs the user to renter the a drive time which is greater than the fastest drive time. The reception module 101 of the navigation device 100 receives the destination and user's desired drive time to reach the destination. As the user drives the vehicle to the destination, the calculation module 102 of the navigation device 100 dynamically calculates the remaining desired drive time from the current location of the vehicle to the destination. The remaining desired drive time is the time required to reach the destination in the desired drive time from the current position of the vehicle. The navigation device 100 dynamically monitors the elapsed time and distance travelled with respect to the user's desired drive time. The navigation device 100 checks whether there are deviations between an actual drive time and the desired drive time.

The estimation module 103 of the navigation device 100 estimates the drive time corresponding to at least one route style from the current location to reach the destination. In an example, the estimation module 102 estimates a drive time to reach the destination in a shortest route. The drive time for a route style is dependent on vehicle condition, user driving behavior, traffic information and the like. The estimation module 103 of the navigation device 100 considers the dependent factors while estimating the drive time for a route style to the destination.

The comparison module 104 of the navigation device 100 compares the remaining desired drive time with each of the drive time corresponding to different route styles. The determination module 105 determines a route style to reach the destination in the desired drive time depending on the comparison. The comparison module 104 of the navigation device 100 checks whether the remaining desired drive time is within a predefined threshold value from the drive time corresponding to a route style. If the determination module 105 finds that the remaining desired drive time is within the predefined threshold value from a drive time, then the navigation device 100 suggests route guidance in the corresponding route style to the user. In an embodiment, the predefined threshold value may be configured based on inputs provided by the user about the desired drive time. For example, when the remaining desired drive time is within the predefined threshold value from the drive time for "fast" route style, the navigation device 100 suggests the "fast" route style to reach the destination in the desired drive time. The navigation device 100 displays the determined route style to the user of the vehicle. In an embodiment, when the navigation device 100 finds that the user is lagging behind with respect to time, the navigation device 100 dynamically shifts to an appropriate route style, for example, a "fast" route style. This enables the user to reach the destination in the desired drive time. In another embodiment, when the user covers considerable distance with respect to time, the navigation device 100 dynamically shifts to an 'Eco Friendly' route style. By this the navigation device 100 allows the user to reach the destination in the desired drive time and also along an eco friendly route.

Figure 2 illustrates a flowchart of the method for route guidance using the navigation device 100 in accordance with this invention. At step S1, a reception module 101 receives a desired drive time to reach a destination. At step S2, a calculation module 102 calculates a remaining desired drive time from a current location to the destination. At step S3, an estimation module 103 estimates a drive time corresponding to at least one route style from the current location to the destination. At step S4, a comparison module 104 compares the remaining desired drive time with the estimated drive time. At step S5, a determination module 105 determines a route style to reach the destination in the desired drive time depending on the comparison.

It must be understood that the embodiments explained in the above detailed description in only illustrative and does not limit the scope of this invention. The scope of this invention is limited only by the scope of the claims. Many modification and changes in the embodiments aforementioned are envisaged and are within the scope of this invention.

## Claims

1. A method for route guidance using a navigation device 100 in a vehicle, said method comprising:
receiving a desired drive time to reach a destination;
dynamically calculating a remaining desired drive time from a current location to said destination;
estimating a drive time corresponding to at least one route style from said current location to said destination;
comparing said remaining desired drive time with said estimated drive time; and
determining a route style to reach said destination in said desired drive time depending on said comparison.

2. A navigation device 100 for route guidance, said navigation device 100 comprising:
a reception module 101 to receive a desired drive time to reach a destination;
a calculation module 102 to calculate a remaining desired drive time from a current location to said destination;
an estimation module 103 to estimate a drive time corresponding to at least one route style from said current location to said destination;
a comparison module 104 to compare said remaining desired drive time with said estimated drive time; and
a determination module 105 to determine a route style to reach said destination in said desired drive time depending on said comparison.

3. The method as claimed in claim 1, wherein said determined route style is based on whether said remaining desired drive time is within a predefined threshold value from said drive time corresponding to said route style.

4. The method as claimed in claim 1, wherein said route style is one of a fastest route, an eco friendly route, a shortest route, and the like.

5. The method as claimed in claim 1, wherein said drive time is dependent on vehicle condition, user driving behavior, traffic information and the like.
